# EUROPEAN PATENT APPLICATION

(11) **EP 1 203 608 A1**
(43) Date of publication of application: **08.05.2002**
(21) Application number: 01830670.4
(22) Date of filing: 24.10.2001
(51) Int. Cl.: B01D 46/46, B01D 53/04

(54) **Process and apparatus for removing pollutants from air in industrial plants**

(30) Priority: 03.11.2000 IT MI002379
(71) Applicant: Valli, Enrico Sergio, 21100 Varese (IT)
(72) Inventor: Valli, Enrico Sergio, 21100 Varese (IT)
(74) Representative: Ghioni, Carlo Raoul Maria

(57) **Abstract**

There is provided a process and a corresponding device for environmental control in industrial plants, particularly intended for use in the textile stain-removal sector, in which following dispersion of a polluting agent in an open internal environment of the industrial plant, an emitting device (6) is activated so as to cause discharge of an air mass taken from the internal environment into an environment external to the plant. Through an exhaust duct (7) incorporating filtering means (10), predetermined amounts of the polluting agent are removed bringing the exhausts to the outside within the prescribed standards. The device comprises means (11) for automatic control of filtering to evaluate the real operation of the emitting device (6); the control means (11) is able to deactivate the emitting device (6) either in case of absence of the polluting agent in the sucked air mass or in case of partial or full exhaustion of the filtering power of the filters (13).

## Description

The present invention relates to a process and related device for environmental control in industrial plants.

In particular the process and device being the subject of the invention can be advantageously used in all sectors in which stain-removal/cleaning/degreasing or similar operations are required which for execution involve use of solvents or other polluting agents.

In detail and as better clarified in the following, the process and related device for environmental control in industrial plants as herein described has proved to be particularly advantageous for application in the textile stain-removal sector.

It is known that presently stain-removal processes used in the textile sector are intended for elimination of stains or dirt depositing on yarns, fabrics or even on the finished product during the different production/working procedures to which the different goods are submitted.

At the present state of the art in this sector different systems are used; a first typology involves a stain-removal operation of the "spray" type by means of an electric gun generating a jet of detergent material (solvents, mixtures of several detergents with or without water and/or steam, for example) with a small opening cone which is therefore directed to the portion to be cleaned in a precise manner; this jet is also provided with the desired pressure. Added to the mechanical cleaning action resulting from the jet, there is also a chemical action due to the presence of preparations, solvents or other products mixed in the fluid.

Such systems put into practice by means of an electric gun can be used in combination with exhaust fans adapted for air cleaning.

It is clear that in the absence of an exhaust fan solvents are vaporized in the work environment giving rise to a great damage for health and therefore causing a great number of drawbacks.

However, also devices provided with an independent exhaust fan or an exhaust fan mounted to a suction hood, although provided with appropriate filters to eliminate the polluting substances and in particular solvents, have hitherto proved not to be very effective and conveniently efficient.

In more detail, leaving apart all considerations as regards wrong sizes of the exhaust fan or incorrect positioning of same, known systems can be first of all easily bypassed by the operator in the workplace and therefore do not ensure an appropriate safety with reference to the requirements of the regulations for environmental protection, in particular in terms of external environment.

More specifically, by appropriate by-pass mechanisms it is possible for the air charged with solvents or polluting substances not to pass through the provided filters before being discharged to the external environment. This operation is in particular left to the discretion of the operator who is carrying out cleaning.

In addition, known devices can be utilized even if the filters should be depleted or absent, which will (sometimes completely) jeopardize the purification action on the air.

A further drawback is then connected with the fact that activated-carbon filters when depleted can be regenerated at least partly by making clean air flow through the filters themselves. In other words, by idling of the emitting device part of the previously-collected polluting compound is dispersed in the surrounding atmosphere thereby enabling the filters to become efficient again. Obviously, by operating in this manner no environmental protection can take place and no control can be carried out by the competent bodies.

Accordingly, it is an aim of the present invention to substantially solve the mentioned drawbacks.

Firstly, it is a main aim of the invention to provide a method and a device capable of obtaining an efficient environmental control in industrial plants, both with reference to the internal working environment and with reference to the external environment where exhausts take place.

It is a further aim of the invention both to ensure perfect operation of the apparatus in an automatic manner avoiding the necessity for repeated direct controls by the user, and to inhibit the possibility of external non-detectable interventions addressed to an improper and incorrect use of the plant.

It is another aim of the invention to enable emission of polluting agents to be almost completely abated by simple expedients such as controlled variations of temperature.

It is an auxiliary aim of the invention to enable regeneration of the filtering elements and therefore reuse of same, while reducing the environmental impact, and also to enable recovery (and possible reuse) of the polluting agents absorbed by the filters.

The technical task mentioned and the aims specified are substantially achieved by a process and the related device for environmental control in industrial plants in accordance with the appended claims.

Further features and advantages will become more apparent from the detailed description of a preferred but not exclusive embodiment of a process and the related device for environmental control in industrial plants. This description will be carried out hereinafter with reference to the accompanying drawings given by way of non-limiting example, in which:
- Fig. 1 is a block diagram relating to possible operations of the device and to the process being the subject of the invention;
- Fig. 2 is a diagrammatic view of the different components of the device adapted to be used in the process referred to in Fig. 1.

With reference to the drawings a device for environmental control in industrial plants has been generally identified by reference numeral 1.

As already pointed out, such a device is preferentially utilized for textile dry stain-removal obtained by use of substances of reduced danger and reduced environmental impact.

In any case it should be again pointed out that such an industrial device will be able to be used in plants for mechanical degreasing or painting, as well as in all sectors wherein a stain-removal/cleaning/degreasing operation is required which involves use of polluting products such as solvents for example, that are used in open environments at the inside of the workplace, and in particular in environments that are not sealed or do not consist of hermetically closed booths.

Typical examples of open internal environments can be work sites accessible to different operators during operation of the machines; these sites are delimited by structures that are not able to completely prevent escape of part of the pollutants or even defined by the so-called "open space" structures within a shed or loft building.

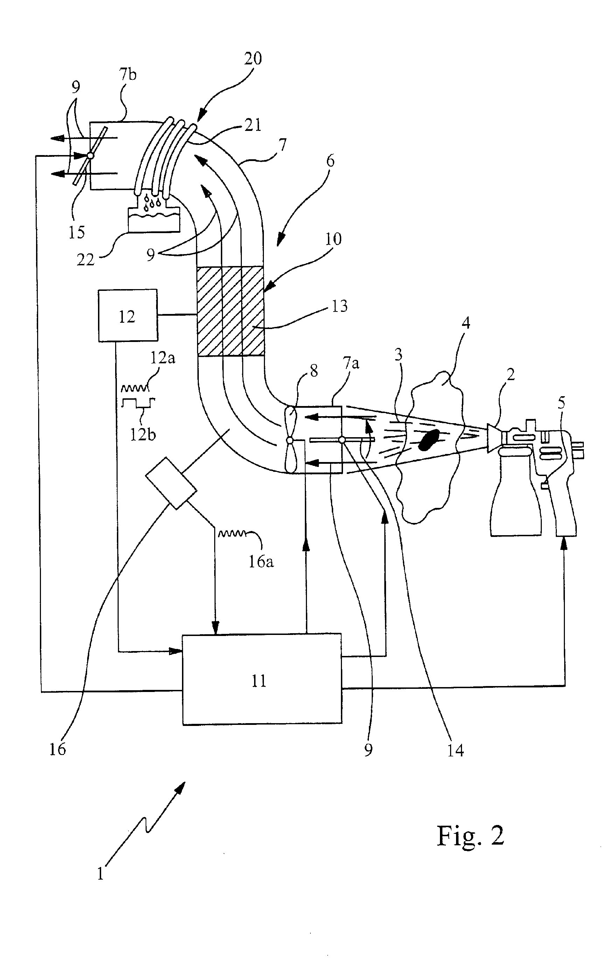

As can be viewed from Fig. 2, the control device 1 first of all comprises an apparatus 2 adapted to generate a flow 3 containing one or more polluting agents in an open internal environment of the industrial plant.

In the particular case of its application in the textile sector, such an apparatus 2 will be for example made up of an electric gun capable of generating a flow of detergent (solvents, mixtures of several detergents with or without water and/or steam, for example) to a high pressure which is directly addressed to the portion of the product 4 to be cleaned.

Practically, the electric gun 2 will be provided with an actuating element 5 (in this particular case a push-button present on the handgrip) adapted to bring it from a non-operating rest condition (absence of flow and therefore of cleaning action) to an operating work condition in which spraying starts.

By operating the push-button on the handgrip of the electric gun, suction of the emitting device 6 associated with the same internal environment in the industrial plant starts as well.

As shown still in Fig. 2, the emitting device 6 is made up of at least one exhaust duct or pipe 7 which has an intake mouth 7a disposed at the internal environment and an outlet portion 7b which is generally placed close to an environment external to the plant. Also associated with the exhaust duct 7 is suction means 8 generally consisting of an appropriate fan or similar device capable of generating a flow in duct 7 consisting of an air mass from the internal environment directed to the environment external to the plant and therefore from the intake mouth 7a to the outlet portion 7b in the direction of arrows 9 shown in the figure. Then, there is a filtering means 10 interposed between the intake mouth 7a and outlet portion 7b which is set to remove a predetermined amount of the polluting agents from the sucked air mass.

In particular this filtering means will consist of a predetermined number of activated-carbon filters arranged to be passed through by said flow so as to clean it.

Once the device has started, the air charged with solvent vapours, passes through the activated-carbon filters that retain from 80 to 90 percent of the solvent. The residual solvent (still in the form of vapours) is conveyed along the disposal line that in turn can be provided with further filters.

In addition to the activated-carbon filters, also means for heat exchange 20 can be provided to enable the flow temperature to be varied during flow passage through the exhaust duct.

In particular the flow going out of the activated-carbon filters 13 is not completely devoid of the polluting agent or agents, since it always carries part of it therewith.

The Applicant has however noticed that addition of appropriate means for heat exchange 20 enables the vapours, that generally are vapours of a polluting agent, to be condensed causing them to precipitate and therefore avoiding emission of same to the outside. By adopting this measure, the emission of polluting agents can be abated until almost a rate of 100%.

It should be noticed that the means for heat exchange can be of any kind, being specifically also adapted particular shapes of the exhaust duct 7 which are able to cause slowing down or at all events successive variations in the velocity of the flow (with a consequent heat exchange), to make temperature decrease to such an extent that precipitation of the polluting agents is caused.

It is however clear that also a normal heat exchanger such as a radiator or the presence of a cooling circuit 21 around the exhaust duct 7 or still alternatively, keeping of a pipe portion to a lower temperature than the flow temperature will enable the desired effect to be achieved.

Therefore it will be exclusively necessary to arrange an appropriate collecting container 22 to remove the further amount of polluting agent in the form of liquid eliminated from the emission flow.

Such a device associated with a device for environmental control in industrial plants, in particular in plants for textile dry stain-removal, has proved to be by itself provided with novel and advantageous features as compared with the known art, i.e. independently of the use of automatic control means 11 evaluating the real operation of the emitting device 6.

Advantageously, the device for environmental control being the object of the invention is also provided with automatic control means 11 active on the different components of the whole apparatus.

In other words the automatic control means 11 is set to carry out checking on good operation, efficiency and lack of tampering of the emitting device.

First of all the control means is directed to check good operation of the activated-carbon filters. Said filters usually have an efficiency of about 90 percent with a yield of 20 percent by weight. This means that 100 kilos of activated carbons absorb 20 kilos of (liquid) solvent and retain 90 percent of possible vapours or gases.

The automatic control means 11 is adapted to warn of the fact that the carbons are about to exhaust their absorbing action, by means of a signal light for example: the operator is given a sufficient work time to be able to replace them with new filters. This time elapsed (which time can vary from one to three hours, for example), the emitting device 6 stops and cannot be used any more until the activated-carbon filters 13 are replaced.

From an operating point of view, control for depletion of filters 13 takes place by at least one sensor 12 which is able to evaluate the weight of the filters 13 themselves and generate a corresponding main control signal 12a when a main threshold value is overcome. Upon command of said main control signal 12a (i.e. upon overcoming of a corresponding weight of filters 13 indicating they are about to be depleted) the control means 11 deactivates the emitting device 6 and the corresponding apparatus 2 (electric gun) for generating a flow 3 containing the polluting agent.

Obviously the number of sensors 12 can be the same as that of the filters 13 used.

Advantageously control for depletion of the activated carbons 13 is defined by a sealed system locking the apparatus when the activated carbons still have 5-10 per cent of their absorbing capacity. Obviously the physical portion of the system carrying out lock-out of the apparatus is sealed as well, and cannot be tampered from the outside without leaving evidence of the action.

Sensor 12 is generally also capable of generating an auxiliary control signal 12b when an auxiliary threshold value linked to the filter weight as well, is overcome. Upon overcoming of this auxiliary threshold value the control means 11 warns in a visual, acoustic or any other appropriate manner, about the fact that exhaustion of the filtering power of filters 13 is taking place.

The last-mentioned particular quality of the device is directed to enable easy and timely measures for replacement of the filters without stopping the working processes.

The emitting device 6 then has at least one inlet valve 14 disposed at the intake mouth 7a of the exhaust duct 7 and at least one outlet valve 15 associated with the exhaust duct 7 at the outlet portion 7b.

Obviously in the running condition of the emitting device 6, such valves 14, 15 will be open to enable passage of the sucked air mass.

The automatic control means 11 is also provided with at least one detection sensor 16 arranged to evaluate the presence or not of one or more polluting agents in the air mass being sucked from said internal environment so as to generate a corresponding signal 16a indicating the presence or absence of flow 3 and/or the polluting agent.

This check, which is carried out when the emitting device is active, enables to distinguish at least three operating conditions: a first condition of good operation in which the detection sensor detects the presence of flow 3 and/or of one or more polluting agents within the exhaust duct and enables operation of the emitting device 6; a second condition involving idling in which the absence of flow 3 and/or of a polluting agent in the sucked air mass is linked to non-operation of the electric gun 2; a third operating condition involving idling in which the electric gun 2 is active but the fluid flow containing the polluting agents is not directed to the intake mouth 7a and therefore the sucked air mass does not contain this flow and these substances.

In particular the signal indicating the absence of the polluting agent 16a causes the practically instantaneous lock-out of the emitting device 6 followed by closure of the inlet valve, preferably the outlet valve and followed by deactivation of the suction means 8.

Also to note is the fact that the whole emitting device 6 is sealed and only replacement of the activated-carbon filters 13 is allowed.

Any other attempt to tamper with the device itself causes an immediate lock-out of the system which therefore is able to operate exclusively under conditions allowing respect of the environmental regulations, both internally of the industrial plant and in the external environment.

At the time the activated-carbon filters used in the device are depleted, they are withdrawn and then regenerated by stripping, enabling subsequent reuses of same. Regeneration of the activated carbons enables four uses on an average in addition to the first one, thereby involving a great saving in terms of invested resources and environmental pollution.

Simultaneously, the solvent is recovered as well and can be either suitably drained or brought to the original conditions again and therefore reused too.

Also this process enables the environmental impact to be greatly reduced because, except for the natural limited losses in each use cycle, the same solvent is utilized several times.

The device herein described can also involve automatic signalling means (not shown in the figures) adapted to enable data sending carried out through the fixed or movable telephone system, the computer network or similar connections. This automatic signalling means is arranged to send, to a company entrusted with management/maintenance of the plant for example, corresponding information relating to good operation of the plant, depletion of the filters, lock-out of the emitting device and any other information which is useful for a good management of the plant itself.

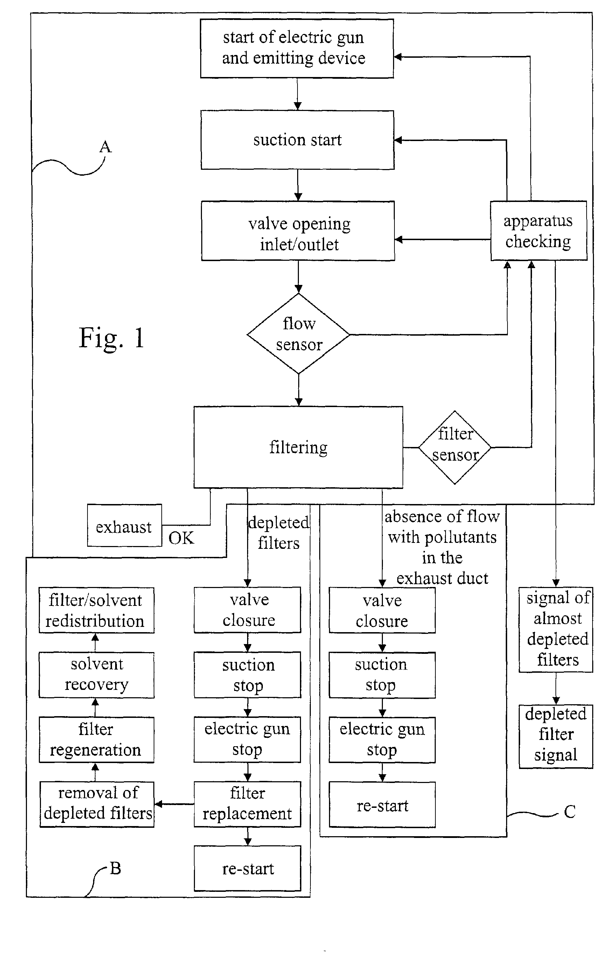

After the above description referred to the device, operation of same will be now detailed referring in particular to the block diagram in Fig. 1.

At the time the operator depresses the start push-button of the electric gun 2, the suction means begins to automatically work in a predetermined period of time, in particular 3/5 seconds; at the same time the inlet valve 14 is opened to enable passage of the forced air mass which is thus conveyed to the activated-carbon filters 13. The air mass can be filtered once or several times depending on the operating requirements.

Still simultaneously with starting of the emitting device 6, the outlet valve 15 too is positioned to the operating working condition (opening). During passage of this air mass inside the exhaust duct 7, one or more detection sensors 16 evaluate the presence of flow 3 and/or one or more polluting agents in the air mass being sucked sending the corresponding signal 16a indicating the presence or absence 16a of a polluting agent.

At the same time, sensors 12 set to evaluate the filter weight in order to establish exhaustion or not of the filtering properties thereof send corresponding signals to the control means 11.

If all conditions required by the control means 11 are met (filters in good condition, operation with solvent suction, no tampering), the device for environmental control goes on with its correct operation enabling discharge of the purified or cleaned air mass to the outside (sequence enclosed by line A).

Should sensors set to evaluate depletion of the activated-carbon filters 13 signal that an auxiliary threshold value has been overcome (filters which are close to depletion), the control means 11 sends a corresponding message, either of the visual type (pilot light) or of the acoustic type for example, to indicate that filters are to be replaced within a short period of time.

At the time said sensors 12 generate the main control signal (depleted filters), the control means 11 commands closure of the inlet valve 14 and subsequently of the outlet valve 15; the same control means 11 stops operation of the suction means and the electric gun 2 thereby locking operation of the whole device. Practically in a relatively short period of time (5/8 seconds) the incorrect operation of the device is inhibited.

Under this situation it is necessary to carry out replacement of the filters and subsequently normal restarting of the device.

The depleted filters are withdrawn, regenerated and possibly the polluting element/s (solvent) is regenerated as well (or at all events drained) and then the recovered elements are distributed again and reused if possible (sequence enclosed by line B).

Should, on the contrary, the detection sensor signal the absence of the polluting agent in the air flow to be cleaned (this being an indication of malfunction of the device or of an attempt to carry out a non-permissible regeneration of the carbons that are close to depletion), again the control means 11 will command closure of the inlet and outlet valves, locking the suction means and inhibiting use of the device and partial regeneration of the activated carbons to the detriment of the environment (sequence enclosed by line C).

In the light of the above description, it is well apparent that the present invention achieves many advantages.

The essential construction simplicity and the almost complete automatic control of the device, on the one hand enable installation of same with reduced costs and times and, on the other hand, allow the regulations for environmental protection to be fully observed independently of tempering attempts and bad use of the plant.

The solvents processed with the above described system are therefore discharged to the external environment always to a controlled amount never exceeding that provided by ARPA regulations for example.

Regeneration and recovery both of the filtering activated carbons and the solvents/polluting products used enable great savings on the cost for plant running as well as a good security on environmental protection.

The possibility of obtaining recovery of the polluting agent in the form of vapour condensed to liquid, due to temperature variations (decreases) applied to the flow in the discharge channel, which is by itself applicable as an inventive idea to the filtering apparatus, enables emissions into the surrounding atmosphere with a very high quality of the air.

## Claims

1. A process for environmental control of industrial plants, preferably plants in the textile sector for textile dry stain-removal or cleaning, comprising the following steps:
- generating a flow (3) incorporating at least one polluting agent in an open internal environment of the industrial plant;
- activating an emitting device (6) associated with said open internal environment in an environment preferably external to the plant, said activation step comprising:
- a step of sucking the air mass of said internal environment into at least one exhaust duct (7);
- at least one step of filtering said air mass, said filtering being carried out through drawing of a predetermined amount of said at least one polluting agent by means of filters (13), **characterized in that** it also comprises a further step of automatically controlling filtering to evaluate a real operation of the emitting device (6), said filtering control being capable of deactivating the emitting device (6) in the case of absence of the polluting agent in the sucked air mass or in case of exhaustion of the filtering power in said filters (13).

2. A process as claimed in claim 1, **characterized in that** the automatic-control step comprises a sub-step of evaluating the weight of the filters (13), said emitting device (6) and said generation of the flow (3) incorporating the polluting agent being disabled if said weight is higher than a pre-established main threshold value.

3. A process as claimed in claim 2, **characterized in that** said emitting device (6) and said generation of the flow (3) incorporating the polluting agent that are disabled following overcoming of the main threshold value can be activated again exclusively after replacement of the filters (13).

4. A process as claimed in anyone of the preceding claims, **characterized in that** the step of generating the flow (3) incorporating the polluting agent and the step of activating the emitting device (6) are correlated in time in an automatic manner.

5. A process as claimed in anyone of the preceding claims, **characterized in that** the activating step comprises a step of opening an inlet valve (14) to enable suction of the air mass and preferably opening of an outlet valve (15) to enable ejection of the sucked air mass.

6. A process as claimed in anyone of the preceding claims, **characterized in that** the filtered air mass is submitted to a predetermined number of further successive filtering steps before admission to the external environment, one of said steps being a heat exchange with temperature variation in the flow (3) to enable precipitation of said polluting agent at least partly.

7. A process as claimed in claim 5, **characterized in that** a step of stopping the flow (3) incorporating the polluting agent involves automatic closure of said inlet valve (14) and preferably of said outlet valve (15).

8. A process as claimed in anyone of the preceding claims, **characterized in that** it comprises a step of evaluating an amount of polluting agent in the sucked air mass, an inlet valve (14) and an outlet valve (15) of the emitting device (6) being closed if the polluting agent in the sucked air mass is of a lower amount than a pre-established value.

9. A process as claimed in anyone of the preceding claims, **characterized in that** it further comprises a step of signalling exhaustion of the filtering power of said filters (13), said signalling step being activated upon comparison between the weight of the filter (13) and a pre-established auxiliary threshold value.

10. A device for environmental control in industrial plants, in particular in plants for textile dry stain-removal or cleaning, comprising:
- an apparatus to generate a flow (3) incorporating at least one polluting agent in an open internal environment of the industrial plant;
- an emitting device (6) associated with said internal environment to cause a discharge of an air mass of said open internal environment into an environment preferably external to the plant, said emitting device (6) comprising:
- at least one exhaust duct (7) having an intake mouth (7a) disposed at said open internal environment and an outlet portion (7b) preferably disposed at an environment external to the plant;
- means (8) for sucking the air mass so as to cause a flow in the duct (7) from the intake mouth (7a) to the outlet portion (7b); and
- filtering means (10) associated with said exhaust duct (7) and set to remove a predetermined amount of said polluting agent from said sucked air mass, **characterized in that** it further comprises automatic control means (11) arranged to evaluate a true operation of the emitting device (6), said control means (11) being active on said emitting device (6) to inhibit operation of same, preferably by lock-out of the suction means (8), either in case of absence of the flow (3) and/or the polluting agent in the sucked air mass or in case of depletion/malfunction of the filtering means (10).

11. A device as claimed in claim 10, **characterized in that** said emitting device (6) further comprises at least one inlet valve (14) located at the intake mouth (7a) of the exhaust duct (7) and at least one outlet valve (15) associated with the exhaust duct (7) at the outlet portion (7b), said filtering means being interposed between the inlet valve (14) and outlet valve (15).

12. A device as claimed in either of claims 10 or 11, **characterized in that** said filtering means (10) which preferably has a predetermined number of activated-carbon filters (13) set to remove said polluting agent at least partly, further comprises means for heat exchange (20) to enable the temperature of the flow (3) to be varied, said means (20) being preferably disposed downstream of the filters (13) and allowing abatement of the values of said at least one polluting agent.

13. A device as claimed in claim 12, **characterized in that** the emitting device (6) further comprises at least one sensor (12) arranged to evaluate the weight of said filters (13) and generate a corresponding main control signal (12a) when a main threshold value is overcome, said control means (11) automatically deactivating the emitting device (6) and the apparatus for generating the flow (3) incorporating the polluting agent upon command of said main control signal (12a).

14. A device as claimed in claim 13, **characterized in that** said sensor (12) generates a corresponding auxiliary control signal (12b) when an auxiliary threshold value is overcome, said control means (11) signalling an exhaustion of the filtering power of said filters (13), preferably in a visual or acoustic manner.

15. A device as claimed in anyone of said claims 10 to 14, **characterized in that** said emitting device (6) is sealed and only replacement of said filtering means (10) is allowed.

16. A device as claimed in anyone of claims 10 to 15, **characterized in that** the automatic control means (11) comprises at least one detection sensor (16) set to evaluate the presence of the flow (3) incorporating the polluting agent in the air mass being sucked from said open internal environment and generate a corresponding signal (16a) indicating the presence or absence of the polluting agent, said signal indicating the absence of the polluting agent causing lock-out of the emitting device (6) preferably following closure of an inlet valve (14), more preferably of an outlet valve (15) and most preferably following deactivation of the suction means (8).

17. A device as claimed in anyone of claims 12 to 16, **characterized in that** said apparatus for generating a flow incorporating the polluting agent comprises an actuating element (5) to bring the apparatus from an operating working condition to a non-operating rest condition and vice versa, said actuation element (5) being also active on the emitting device (6) to cause corresponding starting and shutting off of same correlated in time in an automatic manner with activation/deactivation of the apparatus for generating the flow (3).

18. A device as claimed in anyone of claims 10 to 17, **characterized in that** it further comprises automatic signalling means, such as a fixed or movable telephone system, a computer network or the like, arranged to send corresponding information relating to good operation of the plant, depletion of the filters or lock-out of the emitting device (6) to a company entrusted with management/maintenance of the plant.
